# DEMANDE DE BREVET EUROPEEN

(11) **EP 1 030 040 A1**
(43) Date de publication de la demande: **23.08.2000**
(21) Numéro de dépôt: 00400322.4
(22) Date de dépôt: 04.02.2000
(51) Int. Cl.: F01P 7/16, G05D 23/13

(54) **"Dispositif thermostatique à quatre voies"**

(30) Priorité: 18.02.1999 FR 9902019
(71) Demandeur: VERNET S.A., 91291 Arpajon Cédex (FR)
(72) Inventeur: Bouloy, Alain Bernard Armand, 91580 Etrechy (FR); Velluet, Pascal Gilles, 78720 Dampierre (FR)
(74) Mandataire: Farges, Roger

(57) **Abrégé**

L'invention consiste en un dispositif thermostatique à quatre voies comprenant une entrée (112) pour un fluide, une sortie permanente (113) de fluide, et deux sorties sélectives (121, 114) pour évacuer du fluide respectivement si sa température et sa pression dépassent des valeurs prédéterminées avec priorité à la température. Le dispositif comporte un boîtier (1) cloisonné en deux parties, et un élément thermostatique (2) portant d'une part un clapet principal (3) coopérant avec un siège donnant accès à la sortie sélective (121) pour évacuer du fluide si sa température dépasse sa valeur prédéterminée et d'autre part un manchon tubulaire (4) ajusté pour coulisser dans la cloison (141) et contenant un clapet de délestage (6) coopérant avec le canal central du manchon (4) donnant accès à la sortie sélective (114) pour évacuer du fluide si sa pression dépasse sa valeur prédéterminée.

Le dispositif est utilisable dans les circuits de refroidissement des moteurs thermiques de véhicules.

## Description

L'invention concerne un dispositif thermostatique comprenant un élément thermostatique logé dans un boîtier et portant un équipage mobile, adapté pour pouvoir évacuer un fluide entrant dans le boîtier, par une ou plusieurs parmi trois sorties.

Dans de nombreuses applications du domaine fluidique, et notamment pour le refroidissement de certains moteurs thermiques, il est nécessaire d'orienter un fluide dans des voies différentes en fonction des conditions physiques dans lesquelles il se trouve.

Par exemple, il peut être nécessaire d'orienter un fluide de refroidissement provenant d'un moteur thermique de véhicule, pour partie vers une voie menant à un aérotherme, et pour partie vers un radiateur de refroidissement s'il est chaud, et vers une pompe de circulation s'il est sous pression élevée et à une température relativement basse.

L'invention a pour but de créer un dispositif thermostatique satisfaisant à ces impératifs, suffisamment simple et constitué d'un nombre de pièces suffisamment faible pour ne pas être long et délicat à monter et à installer sur un véhicule.

A cette fin, l'invention concerne un dispositif thermostatique de distribution de fluide à quatre voies, caractérisé en ce qu'il comprend : un boîtier présentant une chambre où s'étend une cloison qui y définit une première partie où débouchent une entrée, une sortie permanente et une première sortie sélective, et une deuxième partie où débouche une deuxième sortie sélective; un élément thermostatique comportant une partie fixe dans le boîtier et une partie mobile en réponse aux variations de température du fluide qui l'entoure ; un clapet principal porté par la partie mobile pour dégager la première sortie sélective seulement quand le fluide est à une température supérieure à une valeur prédéterminée ; un manchon tubulaire porté par la partie mobile coulissant dans un trou traversant la cloison et en saillie dans la deuxième partie de la chambre, comportant un canal interne entouré d'une paroi présentant des premières ouvertures traversantes débouchant dans la première partie de la chambre quand le clapet principal obture la première sortie sélective et obstruées au moins partiellement quand il la dégage, et des deuxièmes ouvertures traversantes débouchant dans la deuxième partie de la chambre ; et un clapet de délestage monté coulissant dans le canal pour laisser communiquer les premières ouvertures avec les deuxièmes seulement quand la pression du fluide dans la première partie de la chambre est supérieure à une valeur prédéterminée.

Grâce à cette structure, les différents composants peuvent être fabriqués facilement, et l'ensemble est compact et facile à monter et à installer.

Le dispositif selon l'invention peut de plus présenter une ou plusieurs des caractéristiques suivantes :
- le boîtier comporte un corps et une pipe assemblés en alignement, la pipe présente un conduit constituant la première sortie sélective et débouchant dans la chambre s'étendant dans le corps en formant un siège pour le clapet principal, et la partie mobile de l'élément thermostatique comporte une collerette contre laquelle le clapet est poussé par le manchon sollicité par un ressort en appui contre la cloison pour exercer un effort de rappel du clapet vers le siège s'opposant au dégagement du conduit de la pipe,
- lorsque le clapet principal dégage la première sortie sélective du boîtier, les premières ouvertures traversantes du manchon sont obstruées au moins partiellement par la paroi latérale du trou traversant la cloison,
- la cloison appartient à un fourreau logé dans une chambre du boîtier,
- l'élément thermostatique comporte une enveloppe et un piston montés coulissants l'un par rapport à l'autre, et la partie de l'élément thermostatique qui est fixe dans le boîtier est le piston, maintenu dans une pipe du boîtier par une butée disposée dans un conduit de la pipe constituant la première sortie sélective,
- le clapet comporte un insert présentant une région en couronne circulaire recouverte partiellement par un enrobage d'une face à l'autre en passant par le chant extérieur de l'insert,
- le manchon est tubulaire et comporte un corps et un collet annulaire appliqué contre le clapet qu'il maintient solidairement en appui contre une collerette de l'élément thermostatique,
- le manchon est tubulaire et comporte un canal dont une extrémité est obturée par une cloison, et le clapet de délestage est monté coulissant dans la région de cette extrémité et comporte une tète, sollicitée par un ressort hélicoïdal interposé entre la tête et la cloison du manchon pour exercer contre la tête un effort de rappel à l'encontre de la mise en communication des premières ouvertures du manchon avec ses deuxièmes ouvertures,
- le clapet de délestage comporte au moins deux tiges élastiques qui traversent une cloison du manchon pour assurer la position fermée du clapet de délestage,
- le boîtier comporte un corps et une pipe assemblés en alignement, la pipe présente un conduit constituant la première sortie sélective, et le corps comporte dans sa paroi des ouvertures traversantes constituant respectivement l'entrée, la sortie permanente et la deuxième sortie sélective du dispositif,
- le boîtier comporte un corps et une pipe assemblés en alignement, la pipe présente un conduit constituant la première sortie sélective, le corps comporte dans sa paroi au moins une ouverture traversante constituant la deuxième sortie sélective, et au moins l'une parmi l'entrée et la sortie permanente du dispositif est constituée par une ouverture dans la paroi de la pipe.

D'autres caractéristiques et avantages de l'invention ressortiront de la description qui va suivre d'une forme de réalisation de l'invention donnée à titre d'exemple non limitatif et illustrée par les dessins joints dans lesquels :
- la figure 1 est une vue schématique en coupe longitudinale d'un dispositif selon l'invention dans lequel les différents composants sont dans une position dans laquelle ils orientent un fluide entrant vers une sortie permanente uniquement ;
- la figure 2 est une vue schématique du dispositif de la figure 1 dans lequel les composants sont dans une position répartissant un fluide entrant entre la sortie permanente et une sortie sélective ; et

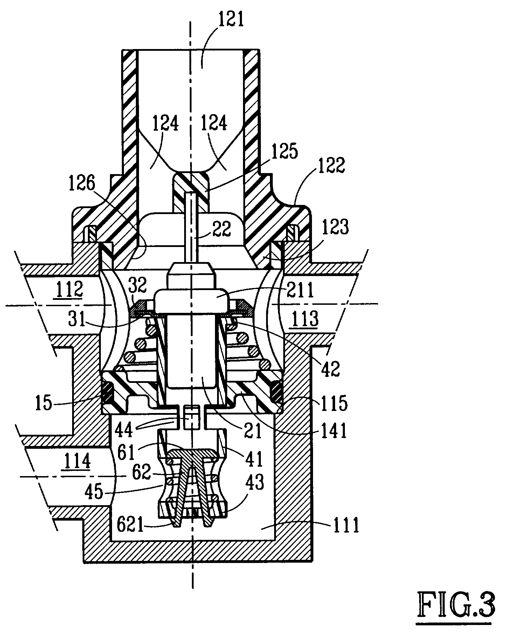

- la figure 3 est une vue schématique du dispositif de la figure 1 dans lequel les composants sont dans une position répartissant un fluide entrant entre la sortie permanente et une autre sortie sélective.

Le dispositif à quatre voies que concerne l'invention comprend de manière connue un élément thermostatique logé dans un boîtier et portant un équipage mobile adapté pour pouvoir évacuer un fluide entrant dans le boîtier, par une ou plusieurs parmi trois sorties.

Plus précisément, le dispositif selon l'invention représenté sur les figures comprend un boîtier 1 comportant ici en alignement un corps 11 et une pipe 12 assemblés l'un à l'autre et présentant intérieurement respectivement une chambre 111 et un conduit 121 ici approximativement cylindriques et s'étendant le long d'un axe central rectiligne commun ; la chambre et le conduit sont dans le prolongement l'un de l'autre de telle sorte que le conduit 121 débouche dans une extrémité de la chambre 111.

Le corps 11 comporte, dans sa paroi, trois ouvertures traversantes 112, 113, 114 d'accès à sa chambre 111, dont deux ouvertures 112, 113 sont disposées à proximité de son extrémité dans laquelle débouche le conduit 121 ; la troisième ouverture 114 est disposée à proximité de l'extrémité opposée fermée de la chambre, ici avec la même orientation radiale que l'une des deux premières lorsque l'on considère le corps 11 en section transversale. Les trois ouvertures traversantes 112, 113, 114 sont entourées d'une cheminée de raccordement à un tuyau, du côté de la surface extérieure du corps 11.

La pipe 12 et le corps 11 sont assemblés l'un à l'autre par exemple au moyen de vis (non représentées) prenant appui sur et traversant une bride 122 de la pipe, vissées dans l'extrémité du corps 11, avec interposition d'un joint annulaire 13. Une partie 123 de la pipe, saillante par rapport à la bride, pénètre dans le corps 11 sans atteindre les ouvertures 112, 113 diamétralement opposées de celui-ci.

La chambre 111 du corps présente du côté de la pipe un plus grand diamètre que du côté opposé, les deux parties de diamètres différents étant raccordées par un épaulement 115 dans la région du corps qui s'étend entre d'une part la paire d'ouvertures 112, 113 diamétralement opposées débouchant ainsi dans la partie de plus grand diamètre et d'autre part la troisième ouverture 114 débouchant dans la partie de plus petit diamètre.

Un fourreau cylindrique 14 ajusté dans la partie de plus grand diamètre s'étend de l'épaulement 115, qui lui sert de butée, à l'extrémité du corps 11 contre laquelle est fixée la pipe 12. La partie 123 de la pipe pénétrant dans le corps 11 présente un diamètre extérieur à peine inférieur au diamètre intérieur du fourreau 14 dans sa région d'extrémité, de telle sorte que dans cette région d'extrémité, le corps 11, le fourreau 14 et la partie saillante 123 de la pipe 12 soient enfilés et ajustés l'un dans l'autre, en allant de l'extérieur vers l'intérieur. Du côté de l'épaulement 115, le fourreau 14 comporte, à proximité de son extrémité, une cloison 141 s'étendant ici transversalement (perpendiculairement à l'axe longitudinal du corps) pour délimiter les deux parties de la chambre, percée d'un trou central circulaire traversant de plus petit diamètre que le conduit de la pipe. Le pourtour du fourreau 14 présente, dans sa région d'extrémité proche de l'épaulement 115, une gorge s'étendant annulairement tout le long de sa circonférence, dans laquelle est logé un joint torique 15 pour assurer l'étanchéité entre le corps et le fourreau. La paroi latérale du fourreau présente une ouverture traversante en regard de chacune des deux ouvertures 112, 113 du corps qui sont diamétralement opposées, afin de mettre en communication l'extérieur du corps 11 et l'intérieur du fourreau 14 via les ouvertures respectives de ces deux pièces ; de préférence, les ouvertures du fourreau s'étendent sur une surface plus grande que les ouvertures 112, 113 du corps et ces dernières ne sont pas partiellement obstruées par la paroi latérale du fourreau.

L'élément thermostatique 2 est un élément à cire dilatable comprenant une enveloppe 21 contenant une masse de cire disposée dans une chambre de l'enveloppe et interposée entre la surface intérieure de cette chambre et une face d'extrémité d'un piston 22 monté coulissant longitudinalement dans l'enveloppe et traversant la paroi de celle-ci ; il en résulte qu'une augmentation de la température de l'élément thermostatique due à une augmentation de la température du fluide qui l'entoure se traduit par une dilatation de la masse de cire et ainsi une plus grande saillie du piston 22 hors de l'enveloppe 21, tandis qu'un abaissement de température provoque une diminution de la saillie du piston hors de l'enveloppe sous l'action d'un organe de rappel tel qu'un ressort. Ici, le piston 22 est maintenu en position fixe dans le boîtier 1, tandis que l'enveloppe 21, mobile en translation longitudinale dans le boîtier, porte l'équipage mobile soumis à l'effort de rappel d'un ressort.

Plus précisément, le conduit 121 de la pipe 12 comporte au moins une nervure 124 s'étendant radialement et portant, sensiblement au centre du conduit, une butée 125 comportant un trou borgne s'étendant dans l'axe du conduit 121 et débouchant du côté du corps 11 pour servir de logement au piston 22 de l'élément thermostatique 2, ajusté ainsi de manière fixe dans ce trou borgne de telle sorte que l'enveloppe 21 de l'élément thermostatique, mobile par rapport au piston, s'étende ici axialement dans le boîtier 1 en direction de l'extrémité fermée de la chambre 111 de celui-ci.

Le conduit 121 de la pipe 12 débouche dans le corps par une partie tronconique 126 évasée en direction de l'extrémité de la pipe, c'est-à-dire de l'extrémité fermée de la chambre du corps ; cette partie tronconique est destinée à constituer un siège de clapet comme on le verra dans la suite.

L'enveloppe 21 de l'élément thermostatique 2 comporte extérieurement, à proximité de son extrémité dans laquelle débouche le piston 22, une collerette 211 située approximativement, lorsque l'élément thermostatique est à la température ambiante, au niveau du siège 126.

L'équipage mobile porté par l'enveloppe 21 de l'élément thermostatique 2 comprend un clapet principal 3 annulaire surmoulé et un manchon 4 allongé et présentant un canal interne central, enfilés autour de l'enveloppe, du côté de la collerette 211 qui est à l'opposé de la partie saillante du piston 22.

Le clapet 3 comprend ici d'une part un insert 31 métallique comportant une première région en couronne circulaire enfilée comme on l'a vu autour de l'enveloppe 21 et maintenue en appui contre la collerette 211, une courte région cylindrique se raccordant à cette région en couronne et s'étendant autour de la collerette sur une petite partie de la longueur de celle-ci en étant ajustée contre elle, et une deuxième région en couronne circulaire s'étendant vers l'extérieur et raccordée à la région cylindrique à l'opposé de la première et dont le bord extérieur est légèrement replié à l'opposé de la collerette 211 ; il comprend d'autre part un enrobage 32 en matériau synthétique recouvrant l'insert 31 de manière continue d'une face à l'autre d'une partie extérieure de la deuxième région en couronne circulaire en passant par le champ extérieur de l'insert.

Le manchon 4 comporte un corps 41 s'étendant, lorsque l'élément thermostatique est à la température ambiante, approximativement depuis le niveau du siège 126, jusqu'en saillie très au-delà du trou central de la cloison d'extrémité 141 du fourreau 14, trou central dans lequel ce corps 41 est ajusté coulissant de manière sensiblement étanche ; ce corps 41 porte extérieurement, à son extrémité côté collerette 211, un collet 42 s'étendant annulairement, et il comporte à son extrémité opposée, une cloison 43 de fermeture ; le manchon 4 est ajusté autour de l'enveloppe 21 de l'élément thermostatique 2 et son collet 42 est appliqué contre la première région en couronne circulaire de l'insert 31 du clapet 3 qu'il maintient solidairement en appui contre la collerette 211 de l'élément thermostatique sous la sollicitation d'un ressort 5 enroulé hélicoïdalement en forme de tronc de cône, et comprimé entre la cloison 141 d'extrémité du fourreau 14 du côté de sa plus grande spire, et le collet 42 du manchon 4 du côté de sa plus petite spire.

Les emplacements relatifs de la butée 125 et du siège 126 de la pipe 12, ainsi que les caractéristiques de l'élément thermostatique 3, sont choisis de telle sorte qu'aux températures inférieures à une température prédéterminée dans la gamme des températures du fluide, le clapet 3 poussé contre la collerette 211 par le manchon 4 sollicité par le ressort 5 soit maintenu en appui contre le siège 126, et qu'il décolle du siège et ainsi dégage le conduit 121 à l'encontre de l'effort de rappel du ressort seulement lorsque la température du fluide dépasse cette température prédéterminée.

La paroi latérale du canal interne du corps 41 du manchon, qui, comme on l'a vu, est ajustée dans le trou central de la cloison 141 du fourreau 14 et s'étend en saillie très au-delà de cette cloison dans la partie de plus petit diamètre de la chambre, présente dans sa région située dans le fourreau 14 qui est voisine de la cloison 141 lorsque le clapet 3 est contre son siège 126, des premières ouvertures 44 traversantes, ici quatre ouvertures traversantes réparties à 90° ; elle comporte également des deuxièmes ouvertures 45 traversantes (ici deux ouvertures diamétralement opposées) dans sa région située hors du fourreau 14 qui est voisine de la cloison 141 dans les mêmes conditions. Ainsi, bien que l'on ait une étanchéité entre le corps 11 et le fourreau 14, et entre le fourreau 14 et le manchon 4, les deux ouvertures 112, 113 diamétralement opposées du corps 11 peuvent être mises en communication avec la troisième ouverture 114 du corps par les ouvertures 44, 45 du manchon dans certaines conditions qui seront exposées dans la suite.

Plus précisément, à l'intérieur du canal central du manchon 4, est logé un clapet 6 de délestage sous la forme d'un piston monté coulissant dans la région de l'extrémité du manchon qui est obturée par une cloison. Ce piston comporte une tête 61 de piston adaptée pour coulisser dans le canal central du manchon sur au moins une partie de la longueur de celui-ci qui est munie des deuxièmes ouvertures 45 situées hors du fourreau 14, entre une position dans laquelle, dépassant les chants des ouvertures 45 en direction de l'élément thermostatique, ou en appui contre ces chants, elle isole les deuxièmes ouvertures traversantes 45 des premières ouvertures 44, et une position dans laquelle elle est suffisamment proche de la cloison d'extrémité 43 du manchon 4 pour dégager au moins une partie de ces deuxièmes ouvertures 45 située à l'opposé de la cloison 43 du manchon.

Le piston 6 comporte ici une ou plusieurs tiges 62 de guidage se raccordant à la tête 61, dont l'extrémité opposéee à la tête traverse la cloison 43 du manchon dans un trou de guidage respectif dans lequel elle peut coulisser ; l'extrémité distale de chaque tige 62 de guidage présente un ergot 621 d'encliquetage empêchant que la tige puisse s'échapper de son trou de guidage, et ainsi que la tête 61 du piston constituant le clapet 6 de délestage s'élève sensiblement au-dessus du niveau auquel il assure l'obturation du canal du manchon 4 dans les cas où il n'est pas bloqué par les chants des deuxièmes ouvertures. Un ressort 7 enroulé hélicoïdalement en forme de cylindre, taré, est disposé entre la cloison 43 du manchon et la face de la tête 61 du piston 6 qui lui fait face, en étant disposé autour de la tige ou des tiges 62 de guidage ; de préférence, le clapet 6 présente deux tiges 62 de guidage se raccordant à la partie centrale de sa tête 61 et allant en s'écartant en direction de la cloison 43 pour limiter la course du clapet 6 en direction de cette cloison. En variante (non représentée sur les dessins), la remontée du clapet 6 vers l'élément thermostatique 2 peut être bloquée en prévoyant une tête de clapet surmontée d'une entretoise de longueur appropriée pour buter contre l'extrémité libre de la partie mobile 22 lorsque le canal du manchon est obturé au niveau désiré.

Pour monter l'équipage mobile, d'une part on enfile le ressort 7 cylindrique dans le manchon 4, puis le clapet 6 que l'on pousse à l'encontre de l'effort du ressort de manière à insérer les tiges 62 dans les trous de guidage et clipser leurs ergots 621 hors du manchon. D'autre part, on enfile le clapet principal 3 autour de l'enveloppe 21 de l'élément thermostatique 2. Puis on dispose l'enveloppe 21 de l'élément thermostatique 2 dans le manchon 4 équipé comme décrit plus haut. Ensuite, on enfile le ressort 5 tronconique autour du corps 41 du manchon 4 et on introduit l'ensemble dans le fourreau 14 en enfilant le manchon 4 dans le trou de la cloison 141 du fourreau. Puis, on emboîte la pipe 12 entre le clapet principal 3 et le fourreau 14, et on maintient l'ensemble assemblé légèrement en pression par un système approprié amovible comprenant par exemple des organes élastiques ou un accouplement à baïonnette, en attente de son montage ultérieur sur le boîtier 11. Naturellement, il peut exister des variantes à l'ordre de montage des différentes pièces, mais l'avantage de l'invention est de pouvoir constituer un sous-ensemble complet prêt à être monté sur un boîtier 11.

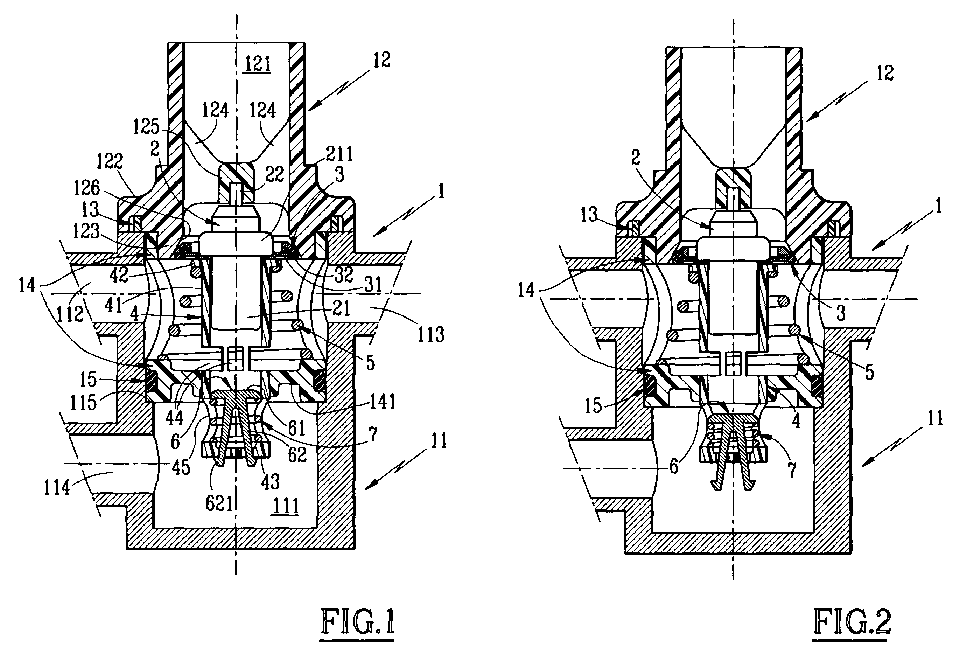

Dans ces conditions, si l'on considère comme entrée (unique) l'une des deux ouvertures 112, 113 diamétralement opposées du corps 1, par exemple l'ouverture 112 qui a la même orientation radiale qu'une autre ouverture 114 destinée à constituer une sortie, et si on introduit un fluide, par exemple de l'eau, par cette entrée, l'évacuation de ce fluide s'effectuera sélectivement en fonction de la température et de la pression de celui-ci. Si le fluide est à une température inférieure à la température prédéterminée et sous faible pression, l'élément thermostatique 2 est rétracté, le clapet principal 3 est appliqué contre le siège 126 de la pipe 12 par le ressort tronconique 5, le conduit 121 de la pipe est ainsi obturé, le clapet de délestage 6 isole les deuxièmes ouvertures 45 du manchon des premières ouvertures 44, et le fluide ne peut s'échapper que par l'ouverture 113 diamétralement opposée à l'entrée 112, constituant alors la sortie permanente (figure 1) ; seulement si, le fluide étant encore à une telle température 〈〈 basse 〉〉, la pression est supérieure à la valeur prédéterminée le clapet principal 3 obture le conduit 121 de la pipe 12 mais le fluide pousse le clapet de délestage 6 à l'encontre de l'effort de rappel du ressort 7 de sorte que le clapet laisse communiquer les premières ouvertures 44 avec les deuxièmes ouvertures 45, et le fluide peut s'échapper non seulement par la sortie 113 diamétralement opposée mais également par l'ouverture 114 qui a la même orientation que l'entrée 112, qui constitue donc la sortie sélective pour le fluide sous haute pression, en transitant par le canal interne du manchon 4 (figure 2). Seulement si le fluide est à une température supérieure à la valeur prédéterminée, le clapet principal 3 s'éloigne du siège 126 de la pipe 12 et dégage le conduit 121 de la pipe, et le fluide peut s'échapper par ce conduit qui constitue donc la sortie sélective pour le fluide à haute température ; en général, dans ce cas, l'élément thermostatique 2 est suffisamment en extension pour que les premières ouvertures 44 du manchon ne soient plus à l'intérieur de l'espace interne du fourreau 14 mais au moins partiellement en vis-à-vis de la paroi du trou de sa cloison 141 d'extrémité, c'est-à-dire pour qu'elles soient au moins partiellement obturées, ce qui empêche ou au moins réduit le transit du fluide vers la sortie 114 ici de même orientation radiale que l'entrée 112.

Le dispositif thermostatique qui vient d'être décrit peut avoir de multiples utilisations, et par exemple être utilisé dans le circuit de refroidissement de véhicules à moteur thermique. Dans ce cas, l'entrée 112 est reliée à la sortie de fluide de refroidissement du moteur, la sortie permanente 113 qui est ici diamétralement opposée peut être reliée à un aérotherme, la sortie sélective 114 du corps 11 ici de même orientation radiale que l'entrée peut être reliée à un circuit de dérivation (bipasse) vers une pompe, et le conduit 121 de la pipe 12 constituant l'autre sortie sélective peut être relié au radiateur de refroidissement. Dans le cas représenté sur les dessins, il est clair que la fonction des ouvertures 112, 113 diamétralement opposées peut être inversée, les deux ouvertures 112, 114 de même orientation radiale pouvant servir de sorties et l'ouverture opposée 113 servant alors d'entrée. Il est également clair qu'il est possible que l'entrée et la sortie permanente ne soient pas diamétralement opposées mais qu'elles soient décalées angulairement ou/et longitudinalement, et qu'il est également possible que l'entrée et la sortie sélective pour les hautes pressions soient décalées angulairement. De même, le corps et la pipe du boîtier peuvent ne pas être alignés dans le prolongement l'un de l'autre, car bien entendu l'invention n'est pas limitée à la forme de réalisation ci-dessus décrite et représentée, et on pourra en prévoir d'autres sans sortir de son cadre, et notamment des formes de réalisation où la jonction entre la pipe et le boîtier, au lieu de se situer approximativement au niveau du siège 126, se situe au delà en direction de la cloison 141 du fourreau 14, par exemple au voisinage de cette cloison, de telle sorte que parmi les ouvertures correspondant à l'entrée et à la sortie permanente, au moins l'une soit une ouverture de la paroi de la pipe.

## Revendications

1. Dispositif thermostatique de distribution de fluide à quatre voies, caractérisé en ce qu'il comprend : un boîtier (1) présentant une chambre (111) où s'étend une cloison (141) qui y définit une première partie où débouchent une entrée (112), une sortie permanente (113) et une première sortie sélective (121), et une deuxième partie où débouche une deuxième sortie sélective (114) ; un élément thermostatique (2) comportant une partie (22) fixe dans le boîtier et une partie (21) mobile en réponse aux variations de température du fluide qui l'entoure ; un clapet principal (3) porté par la partie mobile pour dégager la première sortie sélective (121) seulement quand le fluide est à une température supérieure à une valeur prédéterminée ; un manchon tubulaire (4) porté par la partie mobile (21) coulissant dans un trou traversant la cloison et en saillie dans la deuxième partie de la chambre, comportant un canal interne entouré d'une paroi présentant des premières ouvertures traversantes (44) débouchant dans la première partie de la chambre quand le clapet principal obture la première sortie sélective et obstruées au moins partiellement quand il la dégage, et des deuxièmes ouvertures traversantes (45) débouchant dans la deuxième partie de la chambre ; et un clapet de délestage (6) monté coulissant dans le canal pour laisser communiquer les premières ouvertures avec les deuxièmes seulement quand la pression du fluide dans la première partie de la chambre est supérieure à une valeur prédéterminée.

2. Dispositif selon la revendication 1, caractérisé en ce que le boîtier (1) comporte un corps (11) et une pipe (12) assemblés en alignement, la pipe présente un conduit (121) constituant la première sortie sélective et débouchant dans la chambre (111) s'étendant dans le corps en formant un siège (126) pour le clapet principal (3), et la partie mobile (21) de l'élément thermostatique (2) comporte une collerette (211) contre laquelle le clapet (3) est poussé par le manchon (4) sollicité par un ressort (5) en appui contre la cloison (141) pour exercer un effort de rappel du clapet vers le siège (126) s'opposant au dégagement du conduit de la pipe.

3. Dispositif selon la revendication 1, caractérisé en ce que, lorsque le clapet principal (3) dégage la première sortie sélective (121) du boîtier (1), les premières ouvertures traversantes (44) du manchon (4) sont obstruées au moins partiellement par la paroi latérale du trou traversant la cloison (141).

4. Dispositif selon la revendication 1, caractérisé en ce que la cloison (141) appartient à un fourreau (14) logé dans une chambre (111) du boîtier (1).

5. Dispositif selon la revendication 1, caractérisé en ce que l'élément thermostatique (2) comporte une enveloppe (21) et un piston (22) montés coulissants l'un par rapport à l'autre, et la partie de l'élément thermostatique qui est fixe dans le boîtier (1) est le piston, maintenu dans une pipe (12) du boîtier (1) par une butée (125) disposée dans un conduit (121) de la pipe constituant la première sortie sélective.

6. Dispositif selon la revendication 1, caractérisé en ce que le clapet (3) comporte un insert (31) présentant une région en couronne circulaire recouverte partiellement par un enrobage (32) d'une face à l'autre en passant par le chant extérieur de l'insert.

7. Dispositif selon la revendication 1, caractérisé en ce que le manchon (4) est tubulaire et comporte un corps (41) et un collet (42) annulaire appliqué contre le clapet (3) qu'il maintient solidairement en appui contre une collerette (211) de l'élément thermostatique (2).

8. Dispositif selon la revendication 1, caractérisé en ce que le manchon (4) est tubulaire et comporte un canal dont une extrémité est obturée par une cloison (43), et le clapet de délestage (6) est monté coulissant dans la région de cette extrémité et comporte une tête (61), sollicitée par un ressort hélicoïdal (7) interposé entre la tête (61) et la cloison (43) du manchon pour exercer contre la tête un effort de rappel à l'encontre de la mise en communication des premières ouvertures (44) du manchon avec ses deuxièmes ouvertures (45).

9. Dispositif selon la revendication 1, caractérisé en ce que le clapet de délestage (6) comporte au moins deux tiges élastiques (62) qui traversent une cloison (43) du manchon (4) pour assurer la position fermée du clapet de délestage (6).

10. Dispositif selon la revendication 1, caractérisé en ce que le boîtier (1) comporte un corps (11) et une pipe (12) assemblés en alignement, la pipe présente un conduit (121) constituant la première sortie sélective, et le corps comporte dans sa paroi des ouvertures traversantes (112, 113, 114) constituant respectivement l'entrée, la sortie permanente et la deuxième sortie sélective du dispositif.

11. Dispositif selon la revendication 1, caractérisé en ce que le boîtier comporte un corps et une pipe assemblés en alignement, la pipe présente un conduit constituant la première sortie sélective, le corps comporte dans sa paroi au moins une ouverture traversante constituant la deuxième sortie sélective, et au moins l'une parmi l'entrée et la sortie permanente du dispositif est constituée par une ouverture dans la paroi de la pipe.
